# EUROPEAN PATENT APPLICATION

(11) **EP 4 261 080 A1**
(43) Date of publication of application: **18.10.2023**
(21) Application number: 21906406.0
(22) Date of filing: 06.12.2021
(51) Int. Cl.: B60Q 1/14

(54) **LIGHT DISTRIBUTION CONTROL DEVICE, VEHICULAR LAMP SYSTEM, AND LIGHT DISTRIBUTION CONTROL METHOD**

(30) Priority: 14.12.2020 JP 2020207082; 30.06.2021 JP 2021109511
(71) Applicant: KOITO MANUFACTURING CO., LTD., Minato-ku Tokyo 108-8711 (JP)
(72) Inventor: SUMITANI, Hiroki, Shizuoka-shi Shizuoka 424-8764 (JP); MURAMATSU, Takao, Shizuoka-shi Shizuoka 424-8764 (JP)
(74) Representative: Algemeen Octrooi- en Merkenbureau B.V.
(86) International application number: PCT/JP2021/044657
(87) International publication number: WO 2022/131043

(57) **Abstract**

A light distribution control device (6) controls, using an image (IMG) based on an imaging device (4) for imaging an area in front of a vehicle, a variable light distribution lamp (2) capable of irradiating the area in front with a variable intensity distribution visible light beam (L1). The light distribution control device (6) defines a light irradiating the area in front corresponding to a predetermined high-brightness pixel (202-206) included in the image (IMG) to be a subject light, adjusts an illuminance of the subject light so that a brightness value presented by the high-brightness pixel (202-206) gradually approaches a predetermined target low brightness, and, during adjustment, varies the illuminance by a smaller amount of change when increasing the illuminance than when decreasing the illuminance.

## Description

### [TECHNICAL FIELD]

The present invention relates to a light distribution control device, a vehicular lamp system, and a light distribution control method.

### [BACKGROUND ART]

Recently, adaptive driving beam (ADB) control for controlling a light distribution pattern dynamically and adaptively based on the condition around a vehicle is proposed. ADB control is configured to detect whether a target which is located in front of the driver's vehicle and for which high-brightness light irradiation should be avoided is found and to dim or turn off light in an area corresponding to the target (see, for example, patent literature 1). A target for which light should be dimmed is exemplified by a vehicle in front such as a leading vehicle and an oncoming vehicle. By dimming or turning off light in an area corresponding to the vehicle in front, glare experienced by the driver of the vehicle in front can be reduced.

[Patent Literature 1] JP2016-088224

### [SUMMARY OF INVENTION]

### [TECHNICAL PROBLEM]

In related-art ADB control, a vehicle in front has been a studied as a target for which light should be dimmed. We have made an active study on this and have found out that a light-reflecting object such as a road sign, a delineator, and a signboard is also an important target for which light should be dimmed. Recently, brightness of vehicular lamps has increased, and intensity of light reflected by a light-reflecting object has an increasing tendency. This has increased the likelihood that high-brightness light is reflected from a light-reflecting object to cause the driver of the driver's vehicle to experience glare.

The present invention addresses the issue, and an illustrative purpose thereof is to provide a technology to reduce glare caused by a light-reflecting object.

### [SOLUTION TO PROBLEM]

A light distribution control device according to an aspect of the present invention is a light distribution control device adapted to control, using an image based on an imaging device for imaging an area in front of a vehicle, a variable light distribution lamp capable of irradiating the area in front with a variable intensity distribution visible light beam. The light distribution control device defines a light irradiating the area in front corresponding to a predetermined high-brightness pixel included in the image to be a subject light, adjusts an illuminance of the subject light so that a brightness value presented by the high-brightness pixel gradually approaches a predetermined target low brightness, and, during adjustment, varies the illuminance by a smaller amount of change when increasing the illuminance than when decreasing the illuminance.

Another aspect of the present invention relates to a vehicular lamp system. The vehicular lamp system includes: an imaging device that images an area in front of a vehicle; a variable light distribution lamp capable of irradiating the area in front with a variable intensity distribution visible light beam; and the light distribution control device of the above aspect.

Another aspect of the present invention relates to a light distribution control method adapted to control, using an image based on an imaging device for imaging an area in front of a vehicle, a variable light distribution lamp capable of irradiating the area in front with a variable intensity distribution visible light beam. The method includes: defining a light irradiating the area in front corresponding to a predetermined high-brightness pixel included in the image to be a subject light, adjusting an illuminance of the subject light so that a brightness value presented by the high-brightness pixel gradually approaches a predetermined target low brightness, and, during adjustment, varying the illuminance by a smaller amount of change when the illuminance is increased than when the illuminance is decreased.

Optional combinations of the aforementioned constituting elements, and implementations of the present invention in the form of methods, apparatuses, and systems may also be practiced as additional modes of the present invention.

### [ADVANTAGEOUS EFFECTS OF INVENTION]

According to the present invention, it is possible to reduce glare caused by a light-reflecting object.

### [BRIEF DESCRIPTION OF DRAWINGS]

Fig. 1 is a block diagram of a vehicular lamp system according to the embodiment;
Fig. 2A shows an image obtained while a reference light distribution pattern is being formed;
Fig. 2B shows a result of analysis by the brightness analysis unit;
Fig. 3 shows a transition of the illuminance of a subject light;
Fig. 4 shows a transition of the illuminance of a subject light;
Fig. 5 shows a transition of the illuminance of a subject light;
Fig. 6 is a flowchart showing an example of light distribution control;
Fig. 7 shows a transition of the illuminance of the subject light in variation 1;
Fig. 8 shows a transition of the illuminance of the subject light in variation 2; and
Fig. 9 is a flowchart showing an example of light distribution control according to variation 2.

### [DESCRIPTION OF EMBODIMENTS]

Hereinafter, the invention will be described based on preferred embodiments with reference to drawings. The embodiments do not limit the scope of the invention but exemplify the invention. Not all of the features and the combinations thereof described in the embodiments are necessarily essential to the invention. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not material to the description of the embodiments are omitted in the drawings.

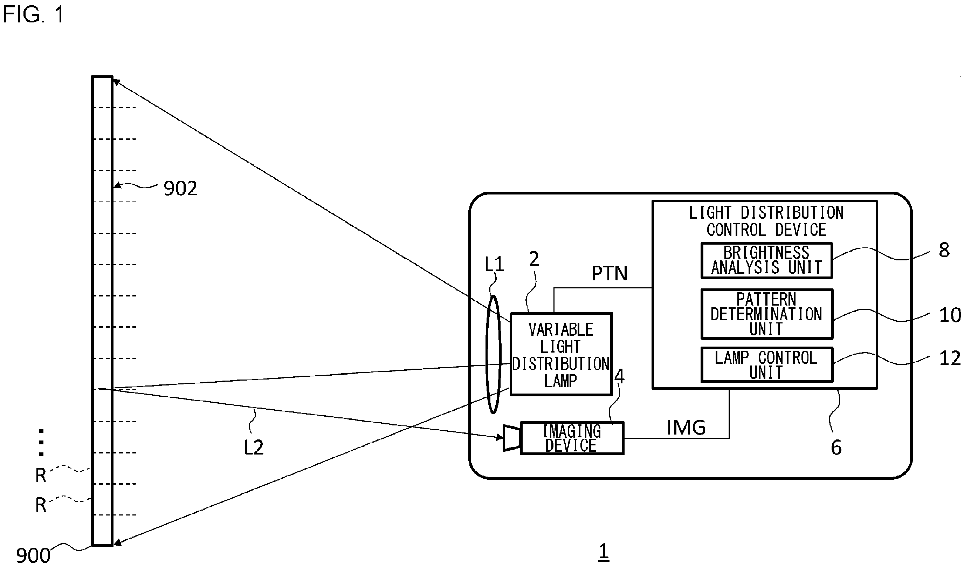

Fig. 1 is a block diagram of a vehicular lamp system according to the embodiment. Fig. 1 depicts some of the constituting elements of a vehicular lamp system 1 as functional blocks. The functional blocks are implemented in hardware such as devices and circuits exemplified by a CPU and a memory of a computer, and in software such as a computer program. It will be understood by those skilled in the art that these functional blocks are implemented in a variety of manners by a combination of hardware and software.

The vehicular lamp system 1 includes a variable light distribution lamp 2, an imaging device 4, and a light distribution control device 6. These may be built in the same housing, or some of the members may be provided outside the housing. For example, the variable light distribution lamp 2, the imaging device 4, and the light distribution control device 6 are housed in a lamp chamber. The lamp chamber is bounded by a lamp body having an opening on the frontward side of the vehicle and a translucent cover attached to cover the opening of the lamp body. The imaging device 4 and the light distribution control device 6 may be housed in the vehicle body.

The variable light distribution lamp 2 is capable of radiating a variable intensity distribution visible light beam L1 to an area in front of the driver's vehicle. The variable light distribution lamp 2 can individually vary that illuminance of light irradiating a plurality of individual areas R arranged in the area in front. The plurality of individual areas R are arranged in, for example, a matrix. The variable light distribution lamp 2 receives information designating a light distribution pattern PTN from the light distribution control device 6 and outputs the visible light beam L1 having an intensity distribution determined by the light distribution pattern PTN. This forms the light distribution pattern PTN in front of the driver's vehicle. The light distribution pattern PTN is understood to be a twodimensional illuminance distribution of an irradiation pattern 902 that the variable light distribution lamp 2 forms on a vertical virtual screen 900 in front of the driver's vehicle.

The embodiment is non-limiting as to the configuration of the variable light distribution lamp 2. For example, the variable light distribution lamp 2 includes a plurality of light sources arranged in a matrix and a lighting circuit that drives the light sources individually to light the light sources. Preferable examples of the light source include a semiconductor light source such as a light emitting device (LED), a laser diode (LD), and an organic or inorganic electroluminescence (EL) device. Each individual area R and each light source are associated with each other, and each individual area R is individually irradiated with light from each light source. For formation of an illuminance distribution determined by the light distribution pattern PTN, the variable light distribution lamp 2 may include a pattern formation device of matrix type such as a digital mirror device (DMD) and a liquid crystal device or include a pattern formation device of optical scan type configured to scan an area in front of the driver's vehicle with a light from the light source.

The frame rate of the variable light distribution lamp 2 is, for example, 60 fps. In other words, the variable light distribution lamp 2 can update the light distribution pattern PTN 60 times per second. In this case, the duration (one frame) for which the variable light distribution lamp 2 forms one light distribution pattern PTN is about 16.7 milliseconds. Further, the resolution of the variable light distribution lamp 2, i.e., the light distribution resolution, is about 10 pixels-2000000 pixels. The resolution of the variable light distribution lamp 2 means the number of unit areas in the light distribution pattern PTN in which the illuminance can be varied independently. By way of one example, each unit area is associated with each individual area R.

The imaging device 4 has sensitivity in the visible light zone and images an area in front of the vehicle repeatedly. The imaging device 4 images a reflected light L2 from an object in front of a vehicle reflecting the visible light beam L1. The imaging device 4 may have sensitivity at least in the wavelength band of the visible light beam L1. An image IMG generated by the imaging device 4 is transmitted to the light distribution control device 6. The image IMG is also transmitted to the vehicle ECU. The vehicle ECU can use the acquired image IMG in ADAS or target recognition in automatic driving.

The image IMG acquired by the light distribution control device 6 may be RAW image data or image data subjected to a predetermined image process by the imaging device 4 or other processing units. In the following description, "the image IMG based on the imaging device 4" means whichever of RAW image data and data subjected to an image process. Both of the image data may be expressed as "image IMG" without making any distinction therebetween. The frame rate of the imaging device 4 is, for example, 60 fps-120 fps (about 8.3-16.7 ms per one frame). Further, the resolution of the imaging device 4 is, for example, 300000 pixels-5000000 pixels.

The light distribution control device 6 uses the image IMG based on the imaging device 4 to control light irradiation from the variable light distribution lamp 2 and dynamically and adaptively control the light distribution pattern PTN. The light distribution control device 6 may be comprised of a digital processor. For example, the light distribution control device 6 may be comprised of a combination of a microcomputer, including a CPU, and a software program. The light distribution control device 6 may alternatively be comprised of a field programmable gate array (FPGA), an application specified IC (ASIC), or the like. The light distribution control device 6 includes, by way of one example, a brightness analysis unit 8, a pattern determination unit 10, and a lamp control unit 12. Each part operates such that an integrated circuit constituting the part runs a program stored in a memory.

The brightness analysis unit 8 uses the image IMG based on the imaging device 4 to analyze the brightness in each individual area R. In brightness analysis, the brightness analysis unit 8 uses, for example, a predetermined brightness threshold value to binarize the brightness value of each pixel in the image IMG. The brightness analysis unit 8 identifies a predetermined high-brightness pixel included in a binarized image. The brightness analysis unit 8 transmits an analysis result to the pattern determination unit 10. The brightness threshold value can be defined as appropriate based on an experiment or simulation and is maintained by the brightness analysis unit 8 in a memory in advance.

The pattern determination unit 10 defines the illuminance of light irradiating each individual area R based on the analysis result of the brightness analysis unit 8 and determines the light distribution pattern PTN formed in an area in front. When determining the light distribution pattern PTN, the pattern determination unit 10 adjusts the illuminance of light irradiating an area in front corresponding to the high-brightness pixel so that the brightness value (pixel value) presented by the high-brightness pixel included in the image IMG gradually approaches predetermined target low brightness. The pattern determination unit 10 maintains information related to the target low brightness in a memory in advance. The target low brightness is brightness that reduces glare experienced by the driver from a light reflected from a light-reflecting object and makes the light-reflecting object visible to the driver. The target low brightness can be defined as appropriate based on an experiment or simulation. The pattern determination unit 10 transmits information related to the determined light distribution pattern PTN to the lamp control unit 12.

The lamp control unit 12 controls the variable light distribution lamp 2 to form the light distribution pattern PTN determined by the pattern determination unit 10. When the light of a light source is modulated by analog light modulation, for example, the lamp control unit 12 adjusts the DC level of the driving current through the light source. When the light of a light source is modulated by pulse width modulation (PWM), the lamp control unit 12 adjusts the average level of the driving current by switching the current through the light source to adjust the percentage of the on period. When the variable light distribution lamp 2 includes a DMD, the lamp control unit 12 may control on/off switching of each mirror element constituting the DMD. When the variable light distribution lamp 2 includes a liquid crystal device, the lamp control unit 12 may control the light transmittance of the liquid crystal device. In this way, the light distribution pattern PTN is formed in front of the driver's vehicle.

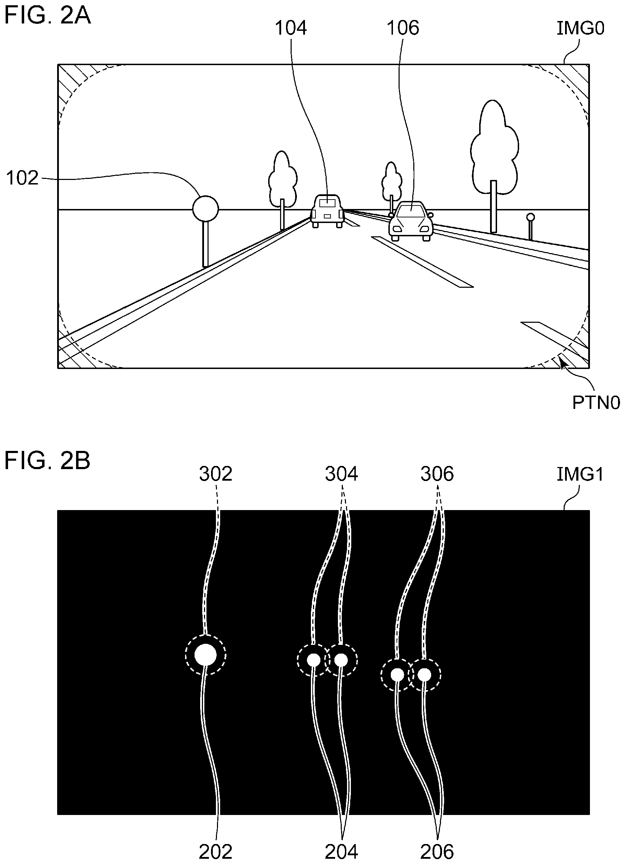

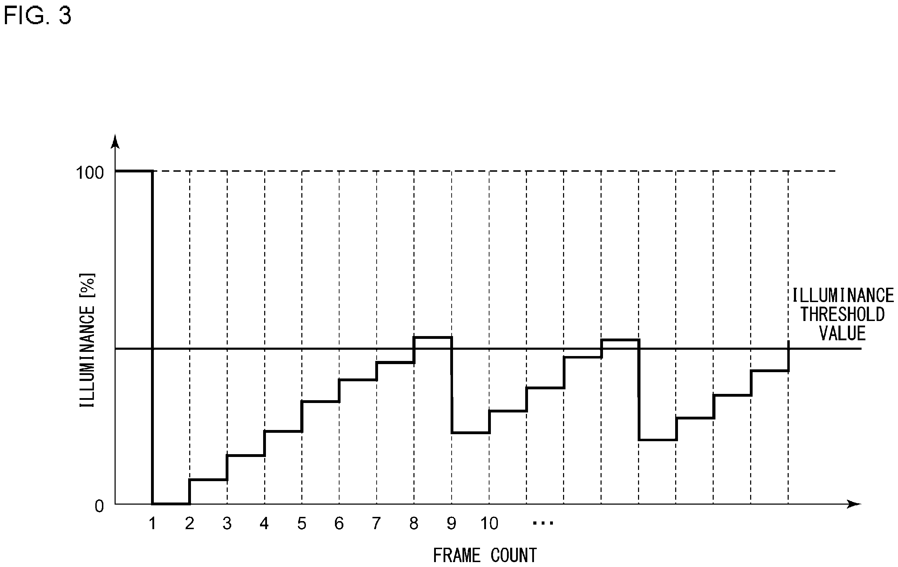

A more detailed description will be given of light distribution control executed by the light distribution control device 6. Fig. 2A shows an image IMG obtained while a reference light distribution pattern PTNO is being formed. Fig. 2B shows a result of analysis by the brightness analysis unit 8. Figs. 3, 4, and 5 show a transition of the illuminance of a subject light. The vertical axis of Figs. 3-5 represents the illuminance defined as a fraction of the 100% illuminance (maximum illuminance) at the maximum rating of the variable light distribution lamp 2.

In one example of light distribution control executed by the light distribution control device 6, the lamp control unit 12 first controls the variable light distribution lamp 2 to form the reference light distribution pattern PTNO. The lamp control unit 12 maintains information related to the reference light distribution pattern PTNO in advance. When the reference light distribution pattern PTNO is formed, the image IMG0 showing a situation in front of the driver's vehicle while the reference light distribution pattern PTNO is being formed is generated by the imaging device 4 as shown in Fig. 2A. The reference light distribution pattern PTNO is a light distribution pattern of fixed illuminance that does not depend on the brightness value of each pixel, i.e., each individual area R. Therefore, the reference light distribution pattern PTNO does not include a shielded-light portion or a reduced-light portion described later. The reference light distribution pattern PTNO by way of one example is a light distribution pattern irradiating substantially the entirety of the imaging range of the imaging device 4 with the illuminance at the maximum rating. In the following description, the illuminance of the reference light distribution pattern PTNO will be referred to as reference illuminance.

The brightness analysis unit 8 identifies a high-brightness pixel by using the image IMG0 obtained when the reference light distribution pattern PTNO is formed. In other words, the brightness analysis unit 8 subjects the image IMG0 to binarization of brightness value, by using the aforementioned brightness threshold value. In the example shown in Fig. 2A, a road sign 102, a leading vehicle 104, and an oncoming vehicle 106 are identified in the area in front. The road sign 102 that is a light-reflecting object is imaged as a high-brightness body while the reference light distribution pattern PTNO is being formed. In the embodiment, a light-reflecting object is of at least one type selected from a group consisting of the road sign 102, the delineator, or the signboard. Alternatively, a light-reflecting object is an object having a recursive reflecting surface at least in a portion visible from the driver's vehicle. Further, the rear lamp of the leading vehicle 104 and the headlamp of the oncoming vehicle 106 are self-luminous bodies and so are imaged as high-brightness bodies.

Therefore, as shown in Fig. 2B, a binarized image IMG1 obtained by binarization of the image IMG0 includes a high-brightness pixel 202 corresponding to the road sign 102, a high-brightness pixel 204 corresponding to the rear lamp of the leading vehicle 104, and a high-brightness pixel 206 corresponding to the headlamp of the oncoming vehicle 106. Therefore, the brightness analysis unit 8 can identify the high-brightness pixels 202-206 from the binarized image IMG1. Each of the high-brightness pixels 202-206 is, by way of one example, a set of a plurality of pixels.

The pattern determination unit 10 defines the light irradiating the areas (individual regions R) in front overlapping the high-brightness pixels 202-206 identified by the brightness analysis unit 8 as a subject light subject to illuminance adjustment. In addition to the light irradiating the area in front corresponding to the high-brightness pixels 202-206, the pattern determination unit 10 of the embodiment also defines the light irradiating the area in front corresponding to surrounding pixels 302-306 located around the high-brightness pixels 202-206 to be a subject light.

The range of each surrounding pixel, namely, the shape of each surrounding pixel, is not particularly limited. For example, the shape is defined to be analogous to each high-brightness pixel. The shielded-light portion for the driver of the leading vehicle 104 or the driver of the oncoming vehicle is defined in separate light distribution control. A lightshielding portion for the driver of the vehicle in front may be determined in light distribution control of the embodiment. In this case, that a high-brightness pixel is originated by a lamp of a vehicle in front can be estimated based on the fact that high-brightness pixels are identified in pairs, i.e., that two high-brightness pixels are arranged at a certain interval in the vehicle width direction or based on the position in the binarized image IMG1. Further, the position where the driver of the vehicle in front is found can be estimated based on the position of the high-brightness pixel.

The pattern determination unit 10 decreases, as shown Figs. 3-5, the illuminance of the subject light to the predetermined minimum illuminance when determining the light distribution pattern PTN formed for the first time (in the first frame) after the reference light distribution pattern PTNO is formed. The minimum illuminance is a value lower than the illuminance corresponding to the target low brightness. In the embodiment, the minimum illuminance is 0% (light shieling). The minimum illuminance is not limited to this and can be defined as appropriate based on an experiment or simulation. The illuminance of light other the subject light is maintained at, for example, the reference illuminance (maximum illuminance). The pattern determination unit 10 transmits information related to the determined light distribution pattern PTN to the lamp control unit 12. The lamp control unit 12 controls the variable light distribution lamp 2 to form the determined light distribution pattern PTN. In this way, the light distribution pattern PTN including the shielded-light portions (which can be said to be reduced-light portions having an illuminance of 0%) overlapping the road sign 102, the leading vehicle 104, and the oncoming vehicle 106 is formed in the area in front. The brightness value of the high-brightness pixel will no longer indicate high brightness as a result of formation of the shielded-light portion in the area in front overlapping the high-brightness pixel originated by the light-reflecting object. However, such a pixel will also be denoted as "high-brightness pixel" for convenience and is distinguished from a pixel that was not a high-brightness pixel while the reference light distribution pattern PTNO is being formed.

Subsequently, the pattern determination unit 10 adjusts, when determining the light distribution pattern PTN formed in the second and subsequent frames, the illuminance of the subject light so that the brightness value of the high-brightness pixel gradually approaches the target low brightness. In this way, the reduced-light portion is formed in the light distribution pattern PTN. When determining the light distribution pattern PTN, the pattern determination unit 10 detects, in the image IMG obtained while the updated light distribution pattern PTN is being formed, the pixel value of each high-brightness pixel identified before the light distribution pattern is updated, i.e., the pixel value of the pixel corresponding to the area in front irradiated by the subject light. The pattern determination unit 10 determines the subsequent light distribution pattern PTN based on the result of detection. Further, the brightness analysis unit 8 executes a process of identifying a high-brightness pixel by using the image IMG. In this way, appearance of a new high-brightness pixel can be detected.

When adjusting the illuminance of the subject light, the pattern determination unit 10 varies the illuminance of the subject light by a smaller amount of change when increasing the illuminance than when decreasing the illuminance. The pattern determination unit 10 of the embodiment adjusts the illuminance of the subject light by using a fixed decrement and a fixed increment. The fixed decrement and the fixed increment are fixed amounts by which the illuminance is varied. The fixed decrement by way of one example is smaller than a difference between the maximum illuminance and the minimum illuminance. Further, the fixed increment is smaller than the fixed decrement. The fixed decrement and the fixed increment can be defined as appropriate based on an experiment or simulation and are maintained by the pattern determination unit 10 in a memory in advance.

In other words, when determining the subsequent light distribution pattern PTN, the pattern determination unit 10 increase the illuminance by the fixed increment to increase the illuminance of the subject light and decreases the illuminance by the fixed decrement to decrease the illuminance of the subject light. In a state in which the brightness value of the high-brightness pixel is lower than the target low brightness, therefore, the brightness value of the high-brightness pixel is increased gradually by the fixed increment every time the light distribution pattern PTN is updated. In a state in which the brightness value of the high-brightness pixel is higher than the target low brightness, on the other hand, the brightness value of the high-brightness pixel is decreased gradually by the fixed decrement every time the light distribution pattern PTN is updated.

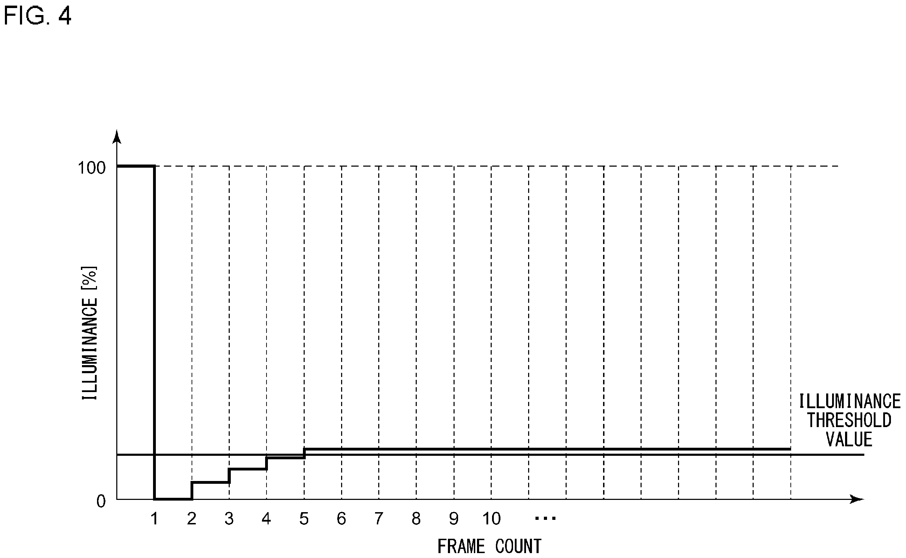

The illuminance of the subject light corresponding to the high-brightness pixel 202 is adjusted by the pattern determination unit 10 as follows. In other words, the road sign 102 originating the high-brightness pixel 202 is a light-reflecting object and is not a self-luminous body. In a state in which the illuminance of the subject light is the minimum illuminance, therefore, the brightness value of the high-brightness pixel 202 falls below the target low brightness. Thus, the pattern determination unit 10 increases the illuminance of the subject light by the fixed increment when determining the light distribution pattern PTN in the subsequent frame. In this way, the illuminance of the subject light will be increased in steps as shown in Figs. 3 and 4.

When the brightness value of the high-brightness pixel 202 exceeds the target low brightness, the pattern determination unit 10 stops increasing the illuminance of the subject light. In the example shown in Fig. 3, the brightness value of the high-brightness pixel 202 exceeds the target low brightness when the light distribution pattern PTN in the eighth frame is formed. In the example shown in Fig. 4, the brightness value of the high-brightness pixel 202 exceeds the target low brightness when the light distribution pattern PTN in the fifth frame is formed. Further, when determining the light distribution pattern PTN formed after stopping an increase in the illuminance, the pattern determination unit 10 determines the illuminance of the subject light in different modes in accordance with the magnitude of the illuminance threshold value. The illuminance threshold value is the illuminance corresponding to the target low brightness. In essence, the brightness value of the high-brightness pixel 202 will indicate the target low brightness when the light with the illuminance threshold value is radiated.

The target low brightness is determined from the perspective of suppressing glare, etc. caused by a light-reflecting object and so can have a uniform value irrespective of the type of light-reflecting object. In contrast, the illuminance threshold value varies, given the same target low brightness, depending on the visible light reflectance of each light-reflecting object. The reflectance of a light-reflecting object is generally high but is not necessarily the same among the objects. When the reflectance is relatively high, it is necessary to decrease the illuminance of the subject light in a relatively large amount to decrease the brightness value of the high-brightness pixel 202 to the target low brightness. Therefore, the illuminance threshold value will be a low value. When the reflectance is relatively low, on the other hand, the amount of decrease in the illuminance necessary to decrease the brightness value of the high-brightness pixel 202 to the target low brightness is relatively small. Therefore, the illuminance threshold value will be a high value. The illuminance threshold value is determined automatically from the target low brightness and the reflectance of the light-reflecting object. Therefore, the illuminance threshold value is not maintained by the pattern determination unit 10 in advance.

The pattern determination unit 10 varies the illuminance of the subject light in the light distribution pattern PTN in the subsequent frame depending on whether the illuminance of the subject light occurring when the illuminance of the subject light exceeds the illuminance threshold value, i.e., when the brightness value of the high-brightness pixel 202 exceeds the target low brightness, is larger than the fixed decrement or equal to or smaller than the fixe decrement. As described above, the information on the fixed decrement is maintained in the memory in advance. Further, the pattern determination unit 10 stores the illuminance of the subject light determined when determining the immediately preceding light distribution pattern PTN. Therefore, the pattern determination unit 10 can determine the relative magnitude of the fixed decrement and the illuminance of the subject light.

When the illuminance of the subject light occurring when the brightness value of the high-brightness pixel 202 exceeds the target low brightness is larger than the fixed decrement, the pattern determination unit 10 decreases the illuminance of the subject light by the fixed decrement in the light distribution pattern PTN in the ninth frame as shown in Fig. 3. This causes the illuminance of the subject light to fall below the illuminance threshold value and so causes the brightness value of the high-brightness pixel 202 to fall below the target low brightness. When the brightness value of the high-brightness pixel 202 falls below the target low brightness, the pattern determination unit 10 again increases the illuminance of the subject light in the fixed increment in the subsequent determination of the light distribution pattern PTN. Thereafter, stepwise increase and one-time decrease in the illuminance of the subject light are repeated.

When the illuminance of the subject light occurring when the brightness value of the high-brightness pixel 202 exceeds the target low brightness is equal to or smaller than the fixed decrement, the pattern determination unit 10 fixes the illuminance of the subject light in the light distribution pattern PTN in the sixth and subsequent frames as shown in Fig. 4.

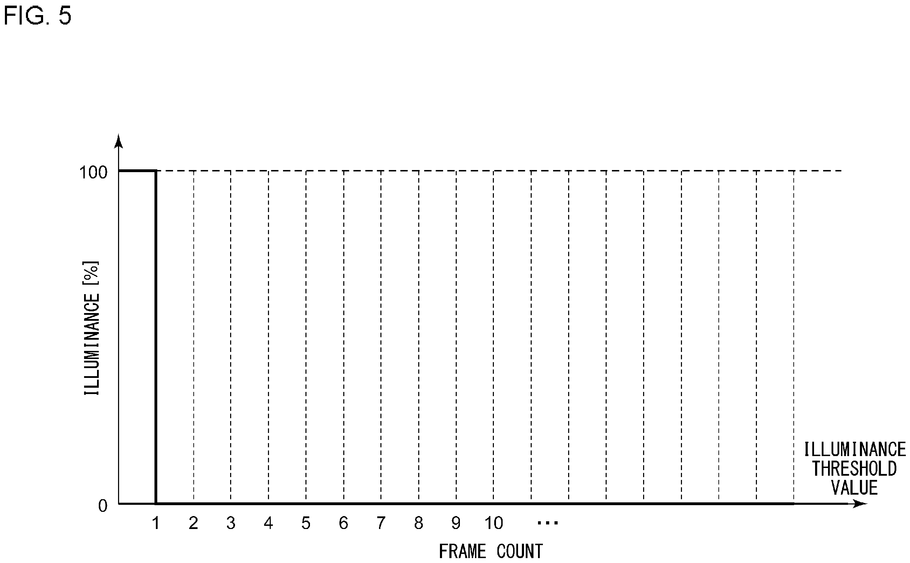

Further, the illuminance of the subject light corresponding to the high-brightness pixels 204, 206 is adjusted by the pattern determination unit 10 as follows. In other words, the lamp of the vehicle in front originating the high-brightness pixels 204, 206 are a self-luminous body. Therefore, even when the illuminance of the subject light irradiating the area in front corresponding to the high-brightness pixels 204, 206 is decreased to the minimum illuminance in the light distribution pattern PTN in the first frame, the brightness of the high-brightness pixels 204, 206 does not change. Therefore, the pattern determination unit 10 cannot switch to control to increasing the illuminance of the subject light. As a result, as shown in Fig. 5, the illuminance of the subject light irradiating the area in front corresponding to the high-brightness pixels 204, 206 is maintained at the minimum illuminance.

The lamp control unit 12 controls, when forming the first light distribution pattern PTN in light distribution control, the variable light distribution lamp 2 to form the reference light distribution pattern PTNO that does not include a shielded-light portion or a reduced-light portion. In subsequent light distribution control, the light distribution pattern PTN in which the illuminance of the subject light is adjusted as described above, i.e., which includes a shielded-light portion or a reduced-light portion in part, is formed, when the image IMG includes a high-brightness pixel. When the light-reflecting object, etc. originating the high-brightness pixel makes a movement (including movement within the image IMG and movement outside the image IMG), the illuminance of the subject light irradiating the position where the light-reflecting object, etc. was located is increased gradually every time the light distribution pattern PTN is updated and ultimately returns to the reference illuminance. By way of one example, when the illuminance of the subject light returns to the reference illuminance, the pattern determination unit 10 cancels designation of the subject light. When a high-brightness pixel newly appears due to a movement or new appearance of a light-reflecting object, etc., the illuminance of a light irradiating the area in front overlapping the high-brightness pixel is decreased from the reference illuminance to the minimum illuminance and is then adjusted so that the brightness value of the high-brightness pixel gradually approaches the target low brightness.

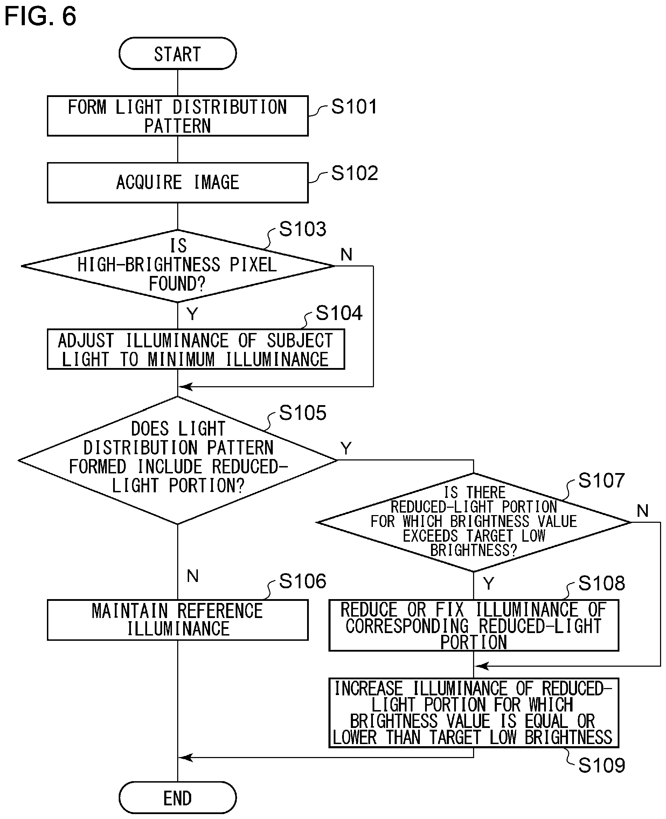

Fig. 6 is a flowchart showing an example of light distribution control. The flow is repeatedly executed according to a predetermined timing schedule when an instruction to execute light distribution control is given via a light switch (not shown) and when the ignition is turned on.

The light distribution control device 6 controls the variable light distribution lamp 2 to form the light distribution pattern PTN (S101). In the case of the first light distribution pattern in light distribution control, the light distribution control device 6 controls the variable light distribution lamp 2 to form the reference light distribution pattern PTNO. Further, the light distribution control device 6 generates a formation flag indicating formation of the light distribution pattern PTN and maintains the flag in a memory. Whether the light distribution pattern is the first light distribution pattern can be judged based on whether the formation flag is found. When it is not the case of the first light distribution pattern, the light distribution control device 6 controls the variable light distribution lamp 2 to form the light distribution pattern PTN determined in the previous routine. The light distribution control device 6 then acquires an image IMG from the imaging device (S102) and determines whether a high-brightness pixel is found in the image IMG (S103).

When a high-brightness pixel is found (Y in S103), the light distribution control device 6 decreases the illuminance of the subject light from the reference illuminance to the minimum illuminance. In other words, the light distribution control device 6 defines a shielded-light portion in the light distribution pattern PTN subsequently formed (S104). When the illuminance of the subject light is lower than the reference illuminance, i.e., when the subject light forms a reduced-light portion, the illuminance of the subject light is maintained in this step. When a high-brightness pixel is not found (N in S103), the light distribution control device 6 skips step S104. The light distribution control device 6 then determines whether the light distribution pattern PTN formed in step S101 includes a reduced-light portion (including a shielded-light portion) (S105). When the light distribution pattern PTN does not include a reduced-light portion (N in S105), the light distribution control device 6 maintains the illuminance of a light irradiating each individual area R at the reference illuminance (S106) and terminates the routine. When a shielded-light portion is defined in step S104, the illuminance of the shielded-light portion is maintained in step S106. The light distribution pattern PTN determined by way of step S106 is formed in step S101 in the subsequent routine.

When the light distribution pattern PTN formed in step S101 includes a reduced-light portion (Y in S105), the light distribution control device 6 determines whether there is a reduced-light portion for which the brightness value of the corresponding individual area R exceeds the target low brightness (S107). When there is a reduced-light portion for which the brightness value exceeds the target low brightness (Y in S107), it means that the illuminance of the corresponding reduced-light portion exceeds the illuminance threshold value. Therefore, the light distribution control device 6 reduces or fixes the illuminance of the corresponding reduced-light portion (S108). When a reduced-light portion for which the brightness value exceeds the target low brightness is not found (N in S107), the light distribution control device 6 skips step S108. The light distribution control device 6 then increases the illuminance of the reduced-light portion for which the brightness value of the corresponding individual area R is equal to or lower than the target low brightness by the fixed increment in the light distribution pattern PTN formed in step S101 (S109) and terminates the routine. The light distribution pattern PTN determined by way of step S109 is formed in step S101 in the subsequent routine. When the light distribution pattern PTN includes only a reduced-light portion(s) for which the brightness value exceeds the target low brightness, the process in step S109 is substantially omitted. The formation flag indicating formation of the light distribution pattern PTN is deleted when an instruction to stop light distribution control is given via the light switch or when the ignition is turned off.

As explained above, the light distribution control device 6 according to the embodiment uses the image IMG based on the imaging device 4 that images an area in front of the vehicle to control the variable light distribution lamp 2 capable of irradiating the area in front with the variable intensity distribution visible light beam L1. The light distribution control device 6 defines the light irradiating the area in front corresponding to the predetermined high-brightness pixels 202-206 included in the image IMG to be the subject light. The light distribution control device 6 adjusts the illuminance of the subject light so that the brightness value presented by the high-brightness pixels 202-206 gradually approaches the predetermined target low brightness. When adjusting the illuminance, the pattern determination unit 10 varies the illuminance by a smaller amount of change when increasing the illuminance than when decreasing the illuminance.

When the headlamp of the driver's vehicle irradiates a light-reflecting object with light, a high-brightness light may be reflected from the light-reflecting object to cause the driver to experience glare. Meanwhile, the light-reflecting object is not a self-luminous body so that the visibility of the light-reflecting object as experienced by the driver could be decreased if light irradiation of the light-reflecting object is weakened. Therefore, reduction of glare caused by the light-reflecting object and prevention of reduction in the visibility of the light-reflecting object should both be met when the light-reflecting object is irradiated with light.

Recently, research and development of advanced driver-assistance systems (ADAS) and automatic driving technologies have been pursued as a technology to assist a driver driving a vehicle. In ADAS and automatic driving technologies, a situation in front of the driver's vehicle is identified by an imaging device such as a camera (mechanical eyes), and vehicle control adapted to the situation is executed. When a high-brightness light is reflected from a light-reflecting object, overexposure is produced in the image generated by the imaging device, which could impede understanding of the situation. When light irradiation of the light-reflecting object is weakened, it will be difficult to detect the light-reflecting object with the imaging device. Therefore, control of light irradiation of the light-reflecting object is useful for improvement of precision in ADAS and automatic driving technologies.

The light distribution control device 6 according to the embodiment addresses the issue by adjusting the illuminance of the subject light so that the brightness value of the high-brightness pixel 202 originated by the light-reflecting object approaches the target low brightness. This makes it possible to reduce glare caused by the light-reflecting object while also maintaining the visibility of the light-reflecting object.

One conceivable method to reduce glare caused by the light-reflecting object is to combine one-time light irradiation with the maximum illuminance and light irradiation with the minimum illuminance (including the case of zero illuminance) performed once or multiple times, thereby restricting the average amount of light irradiation of the light-reflecting object. In the case of this method, however, there will be a large difference in brightness of the light-reflecting object between the case of light irradiation with the maximum illuminance and case of light irradiation with the minimum illuminance. As a result, blinking of the light-reflecting object is easily noticed by the driver and the imaging device as flickering. To prevent flickering from being noticed, it is necessary to use a variable light distribution lamp having a high frame rate (e.g., 800 fps or higher).

The light distribution control device 6 of the embodiment addresses the issue by gradually bringing the brightness value of the high-brightness pixel 202 to the target low brightness. In other words, the light distribution control device 6 varies the illuminance of the subject light so that the brightness of the light-reflecting object changes in an amount smaller than a brightness difference between the case of irradiation at the maximum illuminance and the case of irradiation at the minimum illuminance. This reduces the likelihood of flickering being noticed by the driver and the imaging device even if the frame rate of the variable light distribution lamp is low (e.g., about 60 fps). It is therefore possible to reduce the cost of the vehicular lamp system 1 and, at the same time, reduce glare caused by a light-reflecting object. Also, the visibility of a light-reflecting object for the driver and the imaging device can be improved further.

The light distribution control device 6 of the embodiment also adjusts the illuminance of the subject light such that the amount of change to increase the illuminance is smaller than the amount of change to decrease the illuminance. Depending on the resolution of the illuminance of the variable light distribution lamp 2, the brightness value of the high-brightness pixel 202 could repeatedly exceed and fall below the target low brightness. The cycle of repetition can be extended by configuring the amount of increase in the illuminance to be smaller than amount of decrease. This can further stabilize the brightness of the light-reflecting object near the target low brightness.

The light distribution control device 6 also adjusts the illuminance of the subject light by using a fixed decrement and a fixed increment smaller than the fixed decrement. When the brightness value of the high-brightness pixel 202 falls below the target low brightness by decreasing the illuminance of the subject light, the light distribution control device 6 increases the illuminance of the subject light. When the brightness value of the high-brightness pixel 202 exceeds the target low brightness, the light distribution control device 6 fixes the illuminance of the subject light. This can further stabilize the brightness of the light-reflecting object and simplify light distribution control. Further, when the illuminance of the subject light occurring when the brightness value of the high-brightness pixel 202 exceeds the target low brightness is equal to or lower than the fixed decrement, the light distribution control device 6 of the embodiment fixed the illuminance of the subject light. This reduces the likelihood that viewability of the light-reflecting object is reduced due to an excessive decrease in the total amount of light irradiating the light-reflecting object.

The light distribution control device 6 of the embodiment also decreases the illuminance of the subject light to the predetermined minimum illuminance and then adjusts the illuminance of the subject light so that the brightness value of the high-brightness pixel approaches the target low brightness. In the case the high-brightness pixel is originated by the lamp of a vehicle in front, this can promptly reduce the illuminance of a light irradiating the vehicle in front. Consequently, the likelihood that the driver of the vehicle in front experiences glare can be reduced. Further, the illuminance threshold value of the light-reflecting object such as the road sign 102 is likely to be below 50% and is often about 10%. Therefore, it is possible to cause the brightness value of the high-brightness pixel to approach the target low brightness earlier by decreasing the illuminance of the subject light to the minimum illuminance and the causing it to approach the illuminance threshold value.

In addition to the light irradiating areas in front corresponding to the high-brightness pixels 202-206, the light distribution control device 6 of the embodiment also defines the light irradiating the area in front corresponding to the surrounding pixels 302-306 located around the high-brightness pixels 202-206 to be a subject light. This can reduce the likelihood that the driver of the driver's vehicle experiences glare from the light-reflecting object or the likelihood of giving glare to the driver of the vehicle in front due to light irradiation from the variable light distribution lamp 2, even when the field angle of the variable light distribution lamp 2 and the field angle of the imaging device 4 are displaced. It can also reduce precision required for positioning of the variable light distribution lamp 2 and the imaging device 4.

The embodiment of the present invention is described above in detail. The embodiment described above is merely a specific example of practicing the present invention. The details of the embodiment shall not be construed as limiting the technical scope of the present invention. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of the above constituting elements is also useful as a mode of the present invention. Hatching in the cross section in the drawings should not be construed as limiting the material of the hatched object.

### (Variation 1)

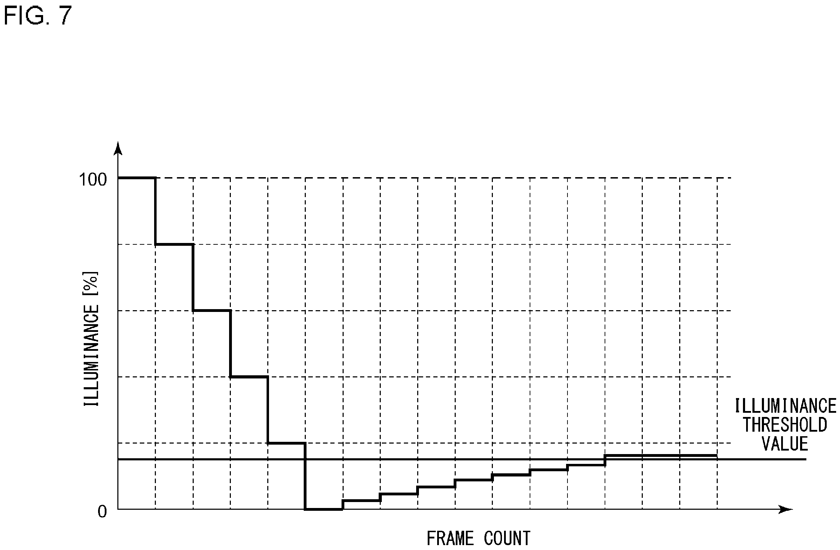

Fig. 7 shows a transition of the illuminance of the subject light in variation 1. The light distribution control device 6 of the embodiment decreases the illuminance of the subject light to the minimum illuminance in the light distribution pattern PTN formed immediately after identifying the high-brightness pixel (in the first frame). Alternatively, however, the light distribution control device 6 may gradually decrease the illuminance of the subject light by the fixed decrement, starting from the first frame.

### (Variation 2)

The light distribution control device 6 of the embodiment decreases the illuminance of the subject light to the minimum illuminance in the first frame after identifying the high-brightness pixel. In the second and subsequent frames, the light distribution control device 6 increases the illuminance by the fixed increment every time the light distribution pattern PTN is updated. Subsequently, when the brightness value of the high-brightness pixel 202 exceeds the target low brightness, the light distribution control device 6 decreases the illuminance by the fixed decrement once or fixes the illuminance in the subsequent frame. Further, the light distribution control device 6 adjusts (maintains) the illuminance of a light other than the subject light, i.e., the illuminance of a light irradiating the area where a target such as a light-reflecting object is not located, at the reference illuminance.

When the target that has originated the high-brightness pixel disappears, the light distribution control device 6 gradually increases, for each pixel, the illuminance of the subject light irradiating the position where the target has been located by the fixed increment every time the light distribution PTN is updated and returns it to the reference illuminance ultimately. In order to return the illuminance of the subject light to the reference illuminance, therefore, it is necessary to update the light distribution pattern PTN by the number of times commensurate with the number of fixed increments necessary to fill the difference between the current illuminance of the subject light and the reference illuminance.

A situation is considered where, in the process in which the illuminance of the subject light irradiating the position where the target originating the high-brightness pixel has disappeared returns to the reference illuminance, the brightness of the pixel corresponding to the position exceeds the target low brightness. Such a situation could arise when a new target appears in the position where the target has disappeared (hereinafter, the first situation). In the case of the first situation, the light distribution control device 6 should execute control to decrease the illuminance of the subject light to the minimum illuminance when determining the subsequent light distribution pattern PTN.

Meanwhile, the above-described situation, when seen locally, can be understood as a situation (hereinafter, the second situation) where a target continues to be located and the brightness value exceeds the target low brightness during control to gradually increase the illuminance of the subject light from the minimum illuminance toward the target low brightness. In the case of the second situation, the light distribution control device 6 should execute control to decrease the illuminance of the subject light by the fixed decrement once or fix the illuminance when determining the subsequent light distribution pattern PTN.

However, the light distribution control device 6 does not determine the light distribution pattern PTN by directly detecting whether a target is located but determines the light distribution pattern based on the brightness values of the respective pixels in the image IMG. When a pixel having a brightness value higher than the target low brightness appears in the image IMG, therefore, the light distribution control device 6 cannot discriminate whether the appearance is caused by the first situation or the second situation. An attempt for discrimination makes control complicated. This is addressed, by way of one example, by light distribution control in which stabilization of the brightness of the target near the target low brightness is prioritized. The above-described situation, when occurring, is determined by default to be caused by the second situation, and control is executed to decrease the illuminance of the subject light by the fixed decrement once or fix the illuminance. Also, the light distribution control device 6 irradiates, in the subsequent frame, light with minimum illuminace only the area in front overlapping the high-brightness pixel detected under irradiation with the reference illuminance light.

If the above-described situation is caused by appearance of a new target, i.e., caused by the first situation, however, the illuminance of the subject light at that time might be deviated significantly from the illuminance threshold value. When the above-described light distribution control is executed, therefore, it is highly likely that the illuminance of the subject light does not fall below the illuminance threshold value merely by decreasing the illuminance by the fixed decrement only once. Thus, the number of times of updating the light distribution pattern PTN necessary to decrease the illuminance of the subject light to the illuminance threshold value or lower will be large, and a longer period of time may be required before the illuminance of the target is stabilized as compared with the case of decreasing the illuminance of the subject light to the minimum illuminance and then gradually increasing the illuminance.

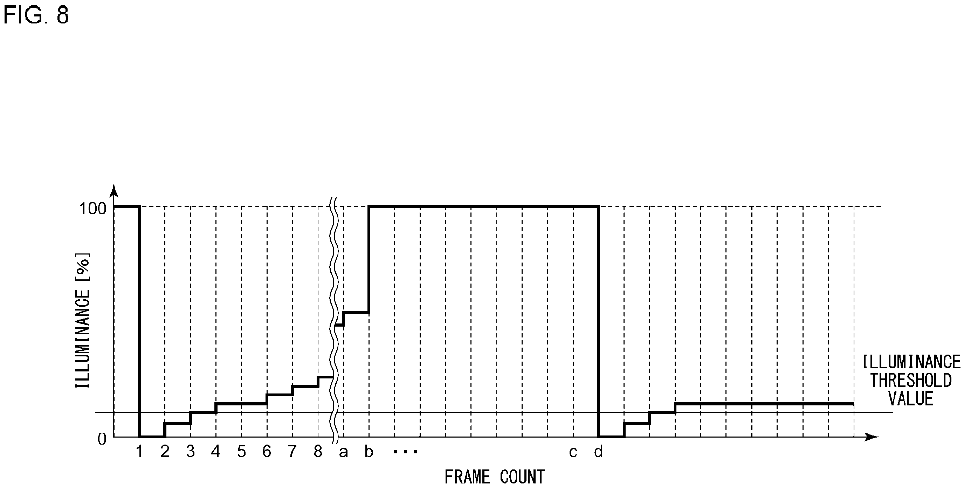

This is addressed by the light distribution control device 6 according to this variation by executing control to increase the illuminance of the subject light by an increment larger than the fixed increment when a predetermined reset condition indicating that the target that has originated the high-brightness pixel has disappeared is met. Fig. 8 shows a transition of the illuminance of the subject light in variation 2. The light distribution control device 6 of this variation maintains a predetermined reset count by way of one example of the reset condition. When the number of times that the illuminance of the subject light is increased by the fixed increment reaches the reset count, the light distribution control device 6 determines that the reset condition is met and increases the illuminance of the subject light by an increment larger than the fixed increment. The reset count can be defined as appropriate based on an experiment or simulation and is, for example, 10-30 times (10-30 frames).

According to such control, the illuminance of the subject light can be returned to the reference illuminance early. This also ensures an opportunity to execute control to radiate light with the minimum illuminance after detecting the high-brightness pixel. Preferably, the light distribution control device 6 defines the illuminance of the subject light occurring when the reset condition is met to be the reference illuminance. This makes it possible to return the illuminance of the subject light to the reference illuminance early.

In the example shown in Fig. 8, the target disappears while the light distribution pattern PTN in the fifth frame is being formed. Therefore, the light distribution control device 6 starts to increase the illuminance of the subject light gradually, starting at the sixth frame. When gradual increase in the illuminance of the subject light is repeated until the a-th frame, the reset count is reached. Thus, the light distribution control device 6 increases the illuminance of the subject light to the reference illuminance in the subsequent b-th frame. Then, a high-brightness pixel is detected while a light with the reference illuminance is being radiated in the c-th frame. Therefore, the light distribution control device 6 decreases the illuminance of the subject light to the minimum illuminance in the subsequent d-th frame.

As an alternative example of the reset condition, the light distribution control device 6 may maintain a predetermined reset illuminance in advance. When the illuminance of the subject light reaches the reset illuminance, the light distribution control device 6 determines that the reset condition is met and increases the illuminance of the subject light by an increment larger than the fixed increment. The reset illuminance can be defined as appropriate based on an experiment or simulation and is, for example, a gray level of 50-70, given that illuminance is defined in 256 gray levels.

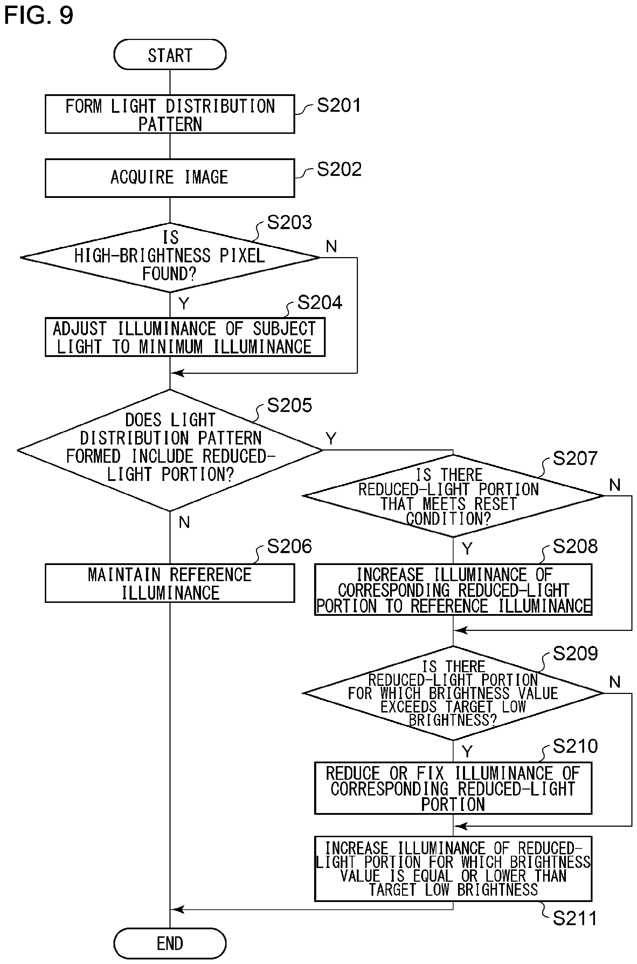

Fig. 9 is a flowchart showing an example of light distribution control according to variation 2. The flow is repeatedly executed according to a predetermined timing schedule when an instruction to execute light distribution control is given via a light switch (not shown) and when the ignition is turned on.

The light distribution control device 6 controls the variable light distribution lamp 2 to form the light distribution pattern PTN (S201). In the case of the first light distribution pattern in light distribution control, the light distribution control device 6 controls the variable light distribution lamp 2 to form the reference light distribution pattern PTNO. Further, the light distribution control device 6 generates a formation flag indicating formation of a light distribution pattern PTN and maintains the flag in a memory. When it is not the case of the first light distribution pattern, the light distribution control device 6 controls the variable light distribution lamp 2 to form the light distribution pattern PTN determined in the previous routine. The light distribution control device 6 then acquires the image IMG from the imaging device (S202) and determines whether a high-brightness pixel is found in the image IMG (S203).

When a high-brightness pixel is found (Y in S203), the light distribution control device 6 decreases the illuminance of the subject light from the reference illuminance to the minimum illuminance (S204). When the illuminance of the subject light is lower than the reference illuminance, the illuminance of the subject light is maintained in this step. When a high-brightness pixel is not found (N in S203), the light distribution control device 6 skips step S204. The light distribution control device 6 then determines whether the light distribution pattern PTN formed in step S201 includes a reduced-light portion (including a shielded-light portion) (S205). When the light distribution pattern PTN does not include a reduced-light portion (N in S205), the light distribution control device 6 maintains the illuminance of a light irradiating each individual area R at the reference illuminance (S206) and terminates the routine. When a shielded-light portion is defined in step S204, the illuminance of the shielded-light portion is maintained in step S206. The light distribution pattern PTN determined by way of step S206 is formed in step S201 in the subsequent routine.

When the light distribution pattern PTN formed in step S201 includes a reduced-light portion (Y in S205), the light distribution control device 6 determines whether there is a reduced-light portion that meets the reset condition (S207). When there is a reduced-light portion that meets the reset condition (Y in S207), the light distribution control device 6 increases the illuminance of the corresponding reduced-light portion to the reference illuminance (S208). When a reduced-light portion that meets the reset condition is not found (N in S207), the light distribution control device 6 skips step S208. The light distribution control device 6 then determines whether a reduced-light portion for which the brightness value of the corresponding individual area R exceeds the target low brightness is found in the light distribution pattern PTN formed in step S201 (S209).

When a reduced-light portion for which the brightness value exceeds the target low brightness is found (Y in S209), the light distribution control device 6 reduces or fixes the illuminance of the corresponding reduced-light portion (S210). When a reduced-light portion for which the brightness value exceeds the target low brightness is not found (N in S209), the light distribution control device 6 skips step S210. The light distribution control device 6 then increases the illuminance of the reduced-light portion for which the brightness value of the corresponding individual area R is equal to or lower than the target low brightness by the fixed increment in the light distribution pattern PTN formed in step S201 (S211) and terminates the routine. The light distribution pattern PTN determined by way of step S211 is formed in step S201 in the subsequent routine.

### (Other variations)

In the embodiment, the illuminance of the subject light is fixed when the illuminance of the subject light occurring when the brightness value of the high-brightness pixel exceeds the target low brightness is equal to or lower than the fixed decrement. Alternatively, the illuminance of the subject light may be fixed when the brightness value of the high-brightness pixel 202 exceeds the target low brightness, regardless of the relative magnitude of the illuminance of the subject light and the fixed decrement. Alternatively, the illuminance of the subject light may be decreased in steps and may be fixed when it falls below the illuminance threshold value.

The invention according to the embodiment described above may be defined by the following items.

### [Item 1]

A light distribution control device (6) adapted to control, using an image (IMG) based on an imaging device (4) for imaging an area in front of a vehicle, a variable light distribution lamp (2) capable of irradiating the area in front with a variable intensity distribution visible light beam (L1), wherein the light distribution control device (6) defines a light irradiating the area in front corresponding to a predetermined high-brightness pixel (202-206) included in the image (IMG) to be a subject light, adjusts an illuminance of the subject light so that a brightness value presented by the high-brightness pixel (202-206) gradually approaches a predetermined target low brightness, and, during adjustment, varies the illuminance by a smaller amount of change when increasing the illuminance than when decreasing the illuminance.

### [Item 2]

A vehicular lamp system (1) including:
an imaging device (4) that images an area in front of a vehicle;
a variable light distribution lamp (2) capable of irradiating the area in front with a variable intensity distribution visible light beam (L1); and
the light distribution control device (6) of the above mode.

### [Item 3]

A light distribution control method adapted to control, using an image (IMG) based on an imaging device (4) for imaging an area in front of a vehicle, a variable light distribution lamp (2) capable of irradiating the area in front with a variable intensity distribution visible light beam (L1), the method comprising: defining a light irradiating the area in front corresponding to a predetermined high-brightness pixel (202-206) included in the image (IMG) to be a subject light, adjusting an illuminance of the subject light so that a brightness value presented by the high-brightness pixel (202-206) gradually approaches a predetermined target low brightness, and, during adjustment, varying the illuminance by a smaller amount of change when the illuminance is increased than when the illuminance is decreased.

### [INDUSTRIAL APPLICABILITY]

The present invention can be used in light distribution control devices, vehicular lamp systems, and light distribution control methods.

### [REFERENCE SIGNS LIST]

1 vehicular lamp system, 2 variable light distribution lamp, 4 imaging device, 6 light distribution control device, 8 brightness analysis unit, 10 pattern determination unit, 12 lamp control unit, 202, 204, 206 high-brightness pixel, 302, 304, 306 surrounding pixel

## Claims

1. A light distribution control device adapted to control, using an image based on an imaging device for imaging an area in front of a vehicle, a variable light distribution lamp capable of irradiating the area in front with a variable intensity distribution visible light beam, wherein
the light distribution control device defines a light irradiating the area in front corresponding to a predetermined high-brightness pixel included in the image to be a subject light, adjusts an illuminance of the subject light so that a brightness value presented by the high-brightness pixel gradually approaches a predetermined target low brightness, and, during adjustment, varies the illuminance by a smaller amount of change when increasing the illuminance than when decreasing the illuminance.

2. The light distribution control device according to claim 1, wherein
the light distribution control device adjusts the illuminance of the subject light by using a fixed decrement and a fixed increment smaller than the fixed decrement, and
when, in a process of decreasing the illuminance of the subject light, the brightness value of the high-brightness pixel falls below the target low brightness, the light distribution control device increases the illuminance of the subject light, and, when the brightness of the high-brightness pixel exceeds the target low brightness, the light distribution control device fixed the illuminance of the subject light.

3. The light distribution control device according to claim 2, wherein
when the illuminance of the subject light occurring when the brightness value of the high-brightness pixel exceeds the target low brightness is equal or lower than fixed decrement, the light distribution control device fixes the illuminance of the subject light.

4. The light distribution control device according to any one of claims 1 through 3, wherein
the light distribution control device decreases the illuminance of the subject light to the minimum illuminance and then adjusts the illuminance of the subject light so that the brightness value of the high-brightness pixel approaches the target low brightness.

5. The light distribution control device according to any one of claims 1 through 4, wherein
in addition to the light irradiating the area in front corresponding to the high-brightness pixel, the light distribution control device also defines a light irradiating an area in front corresponding to surrounding pixels located around the high-brightness pixel to be a subject light.

6. The light distribution control device according to any one of claims 1 through 5, wherein
the light distribution control device adjusts the illuminance of the subject light by using a fixed decrement and a fixed increment smaller than the fixed decrement, and
when a predetermined reset condition indicating that a target that has originated the high-brightness pixel has disappeared is met, the light distribution control device increases the illuminance of the subject light by an amount of increase larger than the fixed increment.

7. The light distribution control device according to claim 6, wherein
the light distribution control device adjusts an illuminance of a light other than the subject light to be a predetermined reference illuminance, and
the light distribution control device defines the illuminance of the subject light to be the reference illuminance when the reset condition is met.

8. A vehicular lamp system comprising:
an imaging device that images an area in front of a vehicle;
a variable light distribution lamp capable of irradiating the area in front with a variable intensity distribution visible light beam; and
the light distribution control device according to any one of claims 1 through 7.

9. A light distribution control method adapted to control, using an image based on an imaging device for imaging an area in front of a vehicle, a variable light distribution lamp capable of irradiating the area in front with a variable intensity distribution visible light beam, the method comprising:
defining a light irradiating the area in front corresponding to a predetermined high-brightness pixel included in the image to be a subject light, adjusting an illuminance of the subject light so that a brightness value presented by the high-brightness pixel gradually approaches a predetermined target low brightness, and, during adjustment, varying the illuminance by a smaller amount of change when the illuminance is increased than when the illuminance is decreased.
